Europäisches Patentamt

European Patent Office

Office européen des brevets

(19)

(11) EP 0 701 674 B1

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(51) Int Cl.6: **F23G 5/00**, F23L 7/00, F23C 9/00

(21) Anmeldenummer: **95915862.7**

(22) Anmeldetag: **10.04.1995**

(86) Internationale Anmeldenummer:
**PCT/EP95/01308**

(87) Internationale Veröffentlichungsnummer:
**WO 95/27872 (19.10.1995 Gazette 1995/45)**

(54) **VERFAHREN ZUR REDUZIERUNG DER EMISSION BEI DER VERBRENNUNG VON ABFÄLLEN**

METHOD OF REDUCING WASTE-INCINERATION EMISSIONS

PROCEDE PERMETTANT DE REDUIRE LES EMISSIONS PRODUITES LORS DE L'INCINERATION DE DECHETS

(84) Benannte Vertragsstaaten:
**CH DE FR GB IT LI**

(30) Priorität: **09.04.1994 WOPCT/EP94/01101**

(43) Veröffentlichungstag der Anmeldung:
**20.03.1996 Patentblatt 1996/12**

(73) Patentinhaber: **SBW SONDERABFALLENTSORGUNG BADEN-WÜRTTEMBERG GmbH 70736 Fellbach (DE)**

(72) Erfinder: **MÄRZ, Herbert D-70439 Stuttgart (DE)**

(74) Vertreter:
**Dreiss, Uwe, Prof. Dr. jur. Dipl.-Ing. M.Sc. Patentanwälte Dreiss, Fuhlendorf, Steimle & Becker, Postfach 10 37 62 70032 Stuttgart (DE)**

(56) Entgegenhaltungen:
**DE-A- 2 360 873          US-A- 5 179 903**

EP 0 701 674 B1

**Beschreibung**

Die Erfindung betrifft ein Verfahren zur Reduzierung der Emission bei der Verbrennung von Abfällen in einer Verbrennungsanlage, bei der ein Teil des bei der Verbrennung entstehenden Rauchgases in einem Kreislaufprozeß an den Eingang der Verbrennungsanlage zurückgeführt, dem zurückgeführten Rauchgas der zur Verbrennung erforderliche reine Sauerstoff zur Bildung einer aus Rauchgas und Sauerstoff gebildeten synthetischen Luft zugemischt wird, wobei das Verhältnis von Rauchgas und Sauerstoff in der synthetischen Luft 4:1 bis 1:1 beträgt.

Ein derartiges Verfahren ist bekannt (vgl. z.B. US-A1-5,179,903).

Aufgabe der vorliegenden Erfindung ist es, eine gezielte und stabile, vor allem aber flexible Verbrennungsprozeßführung zu gewährleisten. Als stabil wird dabei eine Prozeßführung bezeichnet, die ohne Flammenabrisse vonstatten geht.

Erfindungsgemäß wird diese Aufgabe dadurch gelöst, daß der Brennervordruck des am vorderen Ende des den Verbrennungsraum bildenden Drehrohrs vorgesehenen Brenners sowohl im Anfahrbetrieb unter atmosphärischen Bedingungen bzw. der Brennervordruck im stationären Betrieb unter synthetischen Bedingungen einstellbar ist, und das Verhältnis der Brennervordrücke von atmosphärischen zu synthetischen Bedingungen dabei auf 1 : 2,5 bis 1 : 5 vorzugsweise auf 1 : 4 eingestellt ist.

Vorteilhafte Weiterbildungen der Erfindung sind in den Unteransprüchen definiert.

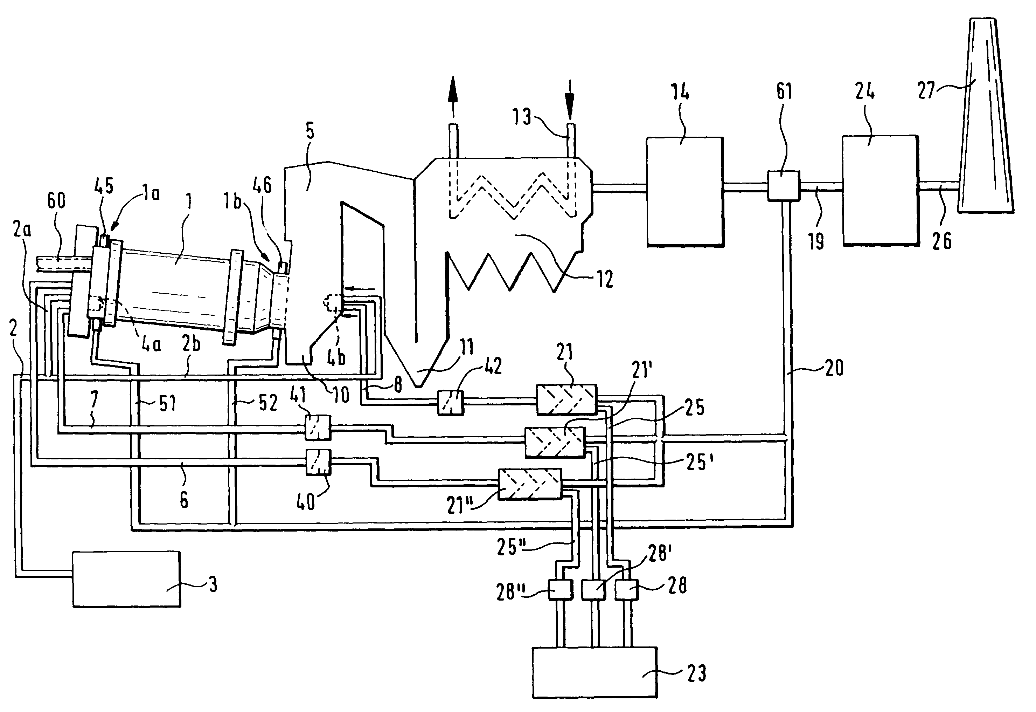

Ein Ausführungsbeispiel des erfindungsgemäßen Verfahrens wird im folgenden anhand der beigefügten Zeichnung beschrieben, die den Verfahrensablauf darstellt.

Der Sonderabfall wird, nachdem der pyrolysierbare Anteil vorher abgetrennt wurde, in ein Drehrohr 1, das als Verbrennungsraum dient, eingebracht. Ein fluider Brennstoff wird als regelbarer Stütz-Energieträger über eine Leitung 2 zugeführt. Der Brennstoff wird als Produkt einer vorgeschalteten Pyrolyse 3 aus heizwertreichen Abfällen gewonnen. Die Brennstoffleitung 2 verzweigt sich in eine Leitung 2a, die zu einem Brenner 4a am vorderen Ende la des Drehrohrs 1 führt, und eine Leitung 2b, die zu einem Brenner 4b in einer Nachbrennkammer 5 führt.

Synthetische Luft, die in Mischern 21, 21', 21" aus Rauchgas und Sauerstoff erzeugt wird, gelangt über die Leitungen 6, 7, 8 in den Verbrennungsprozeß. Dabei ist die Zufuhr synthetischer Luft über Leitung 6 der Zufuhr der Abfälle über Leitung 60 an das vordere Ende 1a des Drehrohrs 1 zugeordnet. Die Zufuhr synthetischer Luft über Leitung 7 ist dem Brenner 4a am vorderen Ende la des Drehrohrs 1 zugeordnet. Die Zufuhr synthetischer Luft über Leitung 8 ist dem Brenner 4b in der Nachbrennkammer 5 zugeordnet. Die Leitung 60 ist eine Hochdruckleitung, über die die Abfälle durch Verpumpen in das Drehrohr 1 kontinuierlich eingepreßt werden. Den Mischkammern 21, 21', 21" wird Rauchgas über die Leitung 20 und Sauerstoff über die Leitungen 25, 25', 25", letzterer von einer Luftzerlegungsanlage 23 her zugeführt. Die Menge des jeweils den Mischkammern 21, 21', 21" zugeführten Sauerstoffs ist an den Reglern 28, 28', 28" einstellbar; dabei ist wichtig, daß diese Einstellbarkeit voneinander unabhängig gegeben ist, so daß über die Leitungen 6, 7, 8 an den bezeichneten Stellen des Verbrennungsprozesses synthetische Luft mit unterschiedlichem Verhältnis Rauchgas zu Sauerstoff zugeführt werden kann. Die Temperatur am vorderen Ende la des Drehrohrs 1 beträgt ca. 700° und steigt bis zu von ca. 1200 bis 1300°C am hinteren Ende 1b. Anschließend gelangt das bei der Verbrennung entstehende Rauchgas in die bereits erwähnte Nachbrennkammer 5, in der der Brenner 4b angeordnet ist. Die ausgebrannte schmelzflüssige Schlacke wird am Ausgang 10 abgezogen und in einem Wasserbad abgeschreckt.

Das Rauchgas gelangt von der Nachbrennkammer 5 in einen Strahlungsteil 11, wo es abgekühlt wird und von dort in einen Abhitzekessel 12 mit einem Wärmetauscher 13. Das Rauchgas dient dabei unter weiterer Abkühlung zur Erzeugung von Dampf, der zur Stromerzeugung verwendet wird (hier nicht dargestellt).

Anschließend gelangt das abgekühlte Rauchgas, das noch eine Temperatur von etwa 300 bis 400°C aufweist, in eine zweistufige Rauchgas-Reinigungsanlage, deren erste Stufe mit 14 und deren zweite Stufe mit 24 bezeichnet ist. In der ersten Stufe 14 der Rauchgas-Reinigungsanlage erfolgt die Abscheidung von Staub, Chlorverbindungen (insbesondere HCl), Schwefeldioxid und Schwermetallen.

Das in der ersten Stufe 14 der Rauchgas-Reinigungsanlage gereinigte Rauchgas wird zu einem Teil, der mit der Regelklappe 61 eingestellt wird, über die Leitung 20 an die bereits erwähnten Mischkammern 21, 21', 21" zurückgeführt.

Die Regelungseinrichtungen 40, 41, 42 werden - ebenfalls unabhängig voneinander - eingestellt. Der Abfall wird im Drehrohr 1 verbrannt. Dabei entspricht im Prinzip der Anteil rückgeführten Rauchgases an der Gesamtmenge der durch Zumischung von Sauerstoff entstehenden reinen Luft dem Anteil des Stickstoffes in normaler Luft (4:1). Er kann jedoch geringer gewählt werden, um eine Luftzahl lambda größer 1 zu erzeugen und dadurch optimale Betriebsbedingungen einzustellen. Als Arbeitsbereich kommt ein Verhältnis von Rauchgas zu Sauerstoff zwischen 4:1 und 1:1, bevorzugt ein Bereich 2:1 bis 1,5:1 in Frage.

Dieser Rauchgaskreislauf hat zur Folge, daß das Drehrohr nicht, wie es eine Verbrennung mit reinem Sauerstoff zur Folge hätte, Temperaturen erreicht, die für herkömmliche Verbrennungstechnologien zu hoch sind. Andererseits verbleibt ein Großteil des bei der Verbrennung entstehenden Rauchgases im Kreislauf. Von Bedeutung ist, daß innerhalb des Kreislaufes in der ersten Stufe 14 der Rauchgas-Reinigungsanlage ein ständiges Auswaschen der schädlichen Emissionsanteile, so insbesondere von Chlor, Schwermetallen und Schwefeldioxid, erfolgt. Die Reinigung in der ersten Stufe 14 ist somit so ausgelegt, daß sich im Kreislauf keine Anreicherung dieser Anteile ergibt, die - wie insbesondere HCl - zur Korrosion der Verbrennungsanlage oder zur Erhöhung der Emission von Schadstoffen in dem Anteil des Rauchgases, der ins Freie gelangt, führen könnten. Diese ständige Reinigung des Rauchgases im Kreislauf hat auch zur Folge, daß der Anteil von schädlichen Abgasen in dem Teil des Rauchgases, der über die Leitung 19 an die zweite Stufe 24 der Rauchgas-Reinigungsanlage und schließlich über den Kamin 27 ins Freie gelangt, gegenüber herkömmlichen Anlagen erheblich reduziert ist, weil insgesamt der Teil des in die Atmosphäre abgegebenen Rauchgases sehr viel geringer als bei herkömmlichen Anlage ist. Die Rauchgasmenge kann von etwa $7,5 \times 10^3 \, m^3$ pro Tonne bei bekannten Verfahren auf etwa $1,5 \times 10^3 \, m^3$ pro Tonne Sonderabfall reduziert werden.

Insbesondere erfolgt eine Verringerung der Stickoxide bei dieser Form der Verbrennung des Abfalls im Drehrohr 1 mit synthetischer Luft dadurch, daß die synthetische Luft kaum mehr Stickstoff enthält, so daß im Drehrohr 1 auch nicht mehr durch Verbrennung des Luftstickstoffes Stickoxide gebildet werden können.

Über die Leitung 19 gelangt der Teil des Rauchgases, der nicht in der Leitung 20 in den Kreislauf zurückgeführt wird, an die zweite Stufe 24, in der die Restreinigung des Rauchgases erfolgt, so insbesondere bezüglich Rest-Schwefeldioxid und Rest-Schwermetallen. Außerdem ist dort die Reinigung von Dioxinen und Furanen in entsprechenden Abscheideeinrichtungen vorgesehen. Falls je erforderlich, kann dort auch eine Restreinigung von Stickoxiden erfolgen.

Um zu vermeiden, daß an den Dichtungsstellen des Drehrohrs 1 Falschluft eingezogen wird, deren Stickstoffanteile zur Bildung von Stickoxiden im Rauchgas führen könnte, sind die Dichtungen des Drehrohres 1 mit Kammern 45 am vorderen Ende la und 46 am rückwärtigen Ende 1b versehen, denen über die Leitungen 51, 52 ebenfalls Rauchgas zugeführt wird. Dieses Rauchgas dient bei den Dichtungen als Schutzgas und verhindert das Einziehen von normaler Stickstoff enthaltenden Luft.

Wie bereits eingangs diskutiert, ist die Verbrennungsleistung eines solchen Systems infolge der höheren Wärmekapazität der synthetischen Luft im Vergleich zu herkömmlichen Anlagen um ca. das 1,5-fache erhöht.

Diese Steigerung der Verbrennungsleistung führt auch - im Verhältnis der Dimensionierung von konventionell ausgelegten Verbrennungsanlagen - zu einer veränderten Strömungsgeschwindigkeiten, die u.U. zu Abrissen der Flamme des Brenners 4a führen können. Dem wird erfindungsgemäß dadurch begegnet, daß die Strömungsgeschwindigkeit der Verbrennungsluft im Drehrohr 1 nach Maßgabe der folgenden Überlegungen gesteuert wird:

Man unterscheidet im allgemeinen mit atmosphärischer Luft betriebene Brenner (z.B. für Heizkesselanlagen, Kraftwerksanlagen. Müllverbrennungsanlagen, usw.), die mit Brennervordrücken von 20 bis 30 mbar betrieben werden, und mit Sauerstoff betriebene Brenner (überwiegend verwendet in der Eisen- und Stahlindustrie), die mit Brennervordrücken von 2 bis 3 bar betrieben werden.

Man hat nun bei dem Verfahren der eingangs genannten Art zunächst erwartet, daß der Betrieb mit synthetischer Luft, also durch Mischung von Rauchgas und Sauerstoff gebildeter Luft, auch mit normalen Brennern, wie sie mit atmosphärischer betrieben werden können, möglich ist. Man war dabei zunächst davon ausgegangen, daß die Wahrscheinlichkeit eines Zusammenstoßes von Sauerstoff- und Brennstoffmolekülen sowohl bei atmosphärischer Luft als auch bei "synthetischer", d.h. auch aus Rauchgas und Sauerstoff, zusammengesetzter Luft dieselbe ist. Das war jedoch überraschenderweise nicht der Fall. Es kam vielmehr bei Verwendung atmosphärischer Brenner mit den üblichen Brennervordrücken von 20 bis 30 mbar zu Flammeninstabilitäten (Pulsation) und damit zum Flammabriss. Damit bestand die Gefahr von Verpuffungen. Stabile Verbrennungsbedingungen konnten weder in Teilnoch im Vollastbetrieb erreicht werden. Die Gründe dafür lagen in den sich verändernden thermodynamischen Randbedingungen, die sich aus dem Verbrennungsprozeß mit synthetischer Luft gegenüber dem Verbrennungsprozeß mit normaler Luft ergaben.

Gemäß der Erfindung wird nun der Verbrennungsvorgang mit Hilfe von synthetischer Luft mit einer - im Vergleich zur Verbrennung mit atmosphärischer Luft - reduzierten Strömungsgeschwindigkeit betrieben, die entweder durch eine Reduzierung des Brennervordruckes atmosphärischer Brenner oder aber, sofern dieser infolge seiner Verwendung eine Brennervordruckeinstellung nicht ermöglicht, durch Einfügen von Regelklappen vor den Brennern realisiert wird.

Die Erklärung ergibt sich aus der Betrachtung der wärmespezifischen Eigenschaften von atmosphärischer Verbrennungsluft im Verhältnis zu synthetischer Verbrennungsluft. Hierzu wird die Formel über die volumenspezifische Wärmetransportkapazität

$$C_{pv} = Q/(V \times \,_{delta}T)$$

verwendet. Setzt man ferner dabei

$$C_{pvi} = \sum_{i=1}^{3} C_{pi} \times \rho_i$$

und verwendet dabei
für atmosphärische Luft

75,0 Vol.% $N_2$ / 77,5 Masse-% $N_2$

13,3 Vol.% $O_2$ / 15,7 Masse-% $O_2$

11,7 Vol.% $H_2O$ / 6,8 Masse-% $H_2O$

und für synthetische Luft

75,0 Vol.% $CO_2$ / 84 Masse-% $CO_2$ ) Grundlage ist

13,3 Vol.% $O_2$ / 10 Masse-% $O_2$ ) die Dichte der

11,7 Vol.% $H_2O$ / 6 Masse-% $H_2O$ ) Komponenten bei 1000°C

Geht man dabei von einer Temperatur von 1000°C aus, so erhält man für synthetische Luft ein $C_{pv} = 0,36$ kJ/m$^3$K und für atmosphärische Luft $C_{pv} = 0,53$ kJ/m$^3$K.

Der Wärmetransport ist also bei ansonsten gleichen Bedingungen bei synthetischer Luft um ca. 47 % besser als bei normaler atmosphärischer Luft.

Aus diesem Unterschied der Wärmekapazität ergeben sich folgende technische Konsequenzen:

Bei gleicher Verbrennungsleistung wird weniger Kreislaufgas für den Wärmeabtransport und die Übertragung bei gleicher Temperatur benötigt. Der Kreislauf braucht aus wärmetechnischer Sicht weniger Gas.

Aufgrund dieser Überlegungen wird plausibel, daß bei Verwendung atmosphärischer Brenner eine stabile Verbrennung - wie bei atmosphärischer Luft - im Falle der Verwendung synthetischer Luft nur erreicht werden kann, wenn die Strömungsgeschwindigkeit entsprechend verringert wird. Daher sind die bereits erwähnten Regelungseinrichtungen 40, 41, 42 vorgesehen, die es ermöglichen, die Strömungsgeschwindigkeiten bei Verwendung atmosphärischer Brenner zu reduzieren.

Diese Aussage läßt sich anhand der folgenden Gegenüberstellung an einem bestimmten Lastpunkt (Erdgasdurchsatz) deutlich machen:

|  | Betrieb mit Normalluft | mit synth. |
|---|---|---|
| Luft |  |  |
| Erdgasdurchsatz | 50 Ncbm/h | 50 Ncbm/h |
| Luft- bzw. Synairdurchsatz | 610 Ncbm/h | 425 Ncbm/h |
| Temperatur Drehrohr | 1160°C | 1080°C |
| Brennervordruck | 20 mbar | 8 mbar |
| Luftzahl lambda | 1,28 | 1,19 |

Anhand dieser Gegenüberstellung wird deutlich, daß bei Verwendung von synthetischer Luft und gleicher Brennerleistung die Verbrennungsluftmenge im Verhältnis zum Betrieb mit atmosphärischer Luft bei stabilen Verbrennungsbedingungen von 610 Ncbm/h auf 425 Ncbm/h, d.h. um ca. 30 % reduziert werden konnte. Wie bereits geschildert, ist dies auf die höhere Wärmetransportkapazität von Kohlendioxid (Rauchgas) im Verhältnis zu Stickstoff (atmosphärischer Luft) zurückzuführen.

Durch eine entsprechende Modifizierung des atmosphärischen Brenners kann eine stufenlose Regelung der Massendurchsätze von atmosphärischer Luft zur synthetischen Luft und damit der entsprechende Brennervordruck bzw. die entsprechende Strömungsgeschwindigkeit erreicht werden.

Eine weitere Möglichkeit besteht in der Installation von stufenlos regelbaren Regelungseinrichtungen 40, 41, 42, die in die Rauchgasleitungen vor den Brennereinheiten positioniert werden.

Eine derartige Reduzierung der Strömungsgeschwindigkeit läßt sich durch stufenlose Regelung des entsprechenden Massedurchsatzes der synthetischen Luft durch die entsprechende Einstellung des Brennervordruckes im Brenner erreichen. Eine weitere Möglichkeit besteht in der Installation von stufenlos regelbaren Regelungseinrichtungen in den Kreislaufgasleitungen vor den Brennersystemen, wie sie in dem Ausführungsbeispiel durch die Regelungseinrichtungen 40, 41, 42 geschaffen worden ist. Auf diese Weise kann die Regelung des Massendurchsatzes unter Verwendung synthetischer Luft so eingestellt werden, daß sich ein stabiler Verbrennungsvorgang ohne Flammenabrisse bzw. Pulsationen und im wesentlichen denselben Temperaturen wie bei der Verwendung atmosphärischer Luft ergeben.

Mit beiden Varianten kann die Regelung des Massendurchsatzes von synthetischer Luft so eingestellt werden, daß die Verbrennungsprozeßführung im synthetischen Betrieb störungsfrei, d.h. ohne Pulsation der Flamme bzw. Flammenabriss und der damit verbundenen gefährlichen Verpuffung erfolgen kann.

Dabei werden im wesentlichen die geforderten Prozeßtemperaturen, wie sie bei der konventionellen Verbrennung vorgeschrieben sind, eingehalten.

Die Tatsache, daß mehrere unterschiedlich einstellbare Mischer 21, 21', 21" vorgesehen sind, ermöglicht eine gezielte Verbrennungsprozeßführung im Hinblick auf die speziellen Bedürfnisse, die durch den Sonderabfall bzw. der Verbrennungsprozeßführung vorgegeben wird. Somit können auf diese Weise unterschiedliche Mischungen der synthetischen Luft, bezogen auf das Aufgabegut des Abfalls, der Stützfeuerung im Drehrohr sowie der synthetischen Stützfeuerung in der Nachbrennkammer unabhängig voneinander eingestellt werden. Es ergeben sich also unabhängig voneinander die drei Regelstrecken, Stützfeuerung, Drehrohr, Nachbrenner.

Wird z.B. heizwertreicher Sonderabfall verbrannt, so wird die dazu benötigte Stützenergie entsprechend eingeschränkt, da die Verbrennungstemperatur durch den weitestgehend selbstgängigen Verbrennungsprozeß gewährleistet ist. Wird dagegen heizwertarmer Sonderabfall verbrannt, so kann der Verbrennungsprozeß nur dann aufrecht erhalten werden, wenn die Zufuhr von Stützenergie entsprechend erhöht wird, um eine bestimmte optimale Prozeßtemperatur zu halten. Bei Betrieb mit synthetischer Luft kann die Erhöhung der Stützenergiemenge dadurch vermieden werden, indem die Sauerstoffkonzentration der sekundären synthetischen Luft so erhöht wird, daß auch wiederum heizwertarmer Abfall mit annähernd gleichbleibender Stützenergie verbrannt werden kann. Oder, anders ausgedrückt: die Zufuhr und Konzentration von synthetischer Verbrennungsluft zur Anreicherung des Abfallproduktes kann nunmehr in Abhängigkeit des vom Heizwert bestimmten Abfalls, sowie durch die zusätzliche Menge synthetischer Luft geregelt werden. Die Rauchgase, die das Drehrohr in Richtung Nachbrenner verlassen, werden dort bei Temperaturen zwischen 1200 und 1300°C verbrannt. Dabei wird die den Brennern zugeführte synthetische Luft nur noch mit der stöchiometrisch notwendigen Sauerstoffkonzentration in dem entsprechenden Mischer angereichert.

Diese unabhängige Regelung der Zusammensetzung der synthetischen Luft in den Regelstrecken Stützfeuerung, Drehrohr und Nachbrenner gewährleistet eine gezielte und flexible Verbrennungsprozeßführung.

## Patentansprüche

1. Verfahren zur Reduzierung der Emission bei der Verbrennung von Abfällen in einer Verbrennungsanlage, bei der ein Teil des bei der Verbrennung entstehenden Rauchgases in einem Kreislaufprozess an den Eingang der Verbrennungsanlage zurückgeführt, dem zurückgeführten Rauchgas der zur Verbrennung erforderliche reine Sauerstoff zur Bildung synthetischer Luft aus Rauchgas und Sauerstoff zugemischt wird, wobei das Verhältnis von Rauchgas und Sauerstoff in der synthetischen Luft 4 : 1 bis 1 : 1 beträgt, **dadurch gekennzeichnet**, dass der Brennervordruck des Brenners (4 a) am vorderen Ende (1a) des den Verbrennungsraum bildenden Drehrohrs (1) einstellbar ist und dass der Brennervordruck beim Betrieb mit synthetischer Luft im Verhältnis zum Betrieb mit normaler Luft bei gleicher Brennerleistung auf einen Wert von 1 : 2,5 bis 1 : 5, vorzugsweise 1 : 4 eingestellt ist.

2. Verfahren nach Anspruch 1, dadurch gekennzeichnet, dass der Brennervordruck beim Betrieb mit synthetischer Luft 5 bis 15 mbar, vorzugsweise 8 mbar beträgt.

3. Verfahren nach Anspruch 1 oder 2, dadurch gekennzeichnet, dass die Menge synthetischer Luft auf der Regelstrecke für die Verbrennung des Abfalls, auf der Regelstrecke für die Verbrennung in der Nachbrennkammer und auf der Regelstrecke für die Verbrennung eines Stützenergie-Trägers jeweils unabhängig einstellbar ist.

## Claims

1. A method of reducing the emissions in the incineration of waste in an incinerator in which a part of the flue gas produced in the incineration operation is returned in a recycle process to the intake of the incinerator, the pure oxygen required for the incineration operation is mixed with the recycled flue gas to form synthetic air comprising flue gas and oxygen, wherein the ratio of flue gas and oxygen in the synthetic air is from 4:1 to 1:1, characterised in that the burner inlet pressure of the burner (4a) at the front end (1a) of the rotary tube (1) forming the incinceration chamber is adjustable and that the burner inlet pressure is adjusted in operation with synthetic air in relation to operation with normal air to a value of from 1:2.5 to 1:5, preferably 1:4, with the same burner output.

2. A method according to claim 1 characterised in that the burner inlet pressure in operation with synthetic air is from 5 to 15 mbar, preferably 8 mbar.

3. A method according to claim 1 or claim 2 characterised in that the amount of synthetic air is independently adjustable respectively on the regulating section for incineration of waste, on the regulating section for incineration in the post-combustion chamber and on the regulating section for incineration of a supporting energy carrier.

**Revendications**

1. Procédé permettant de réduire les émissions produites lors de l'incinération de déchets dans un incinérateur, dans lequel une partie des gaz de fumée dégagés lors de l'incinération sont renvoyés en circuit à l'entrée de l'incinérateur et dans lequel l'oxygène pur nécessaire à la combustion est mélangé aux gaz de fumée recyclés en vue de former un air synthétique composé de gaz de fumée et d'oxygène, le rapport gaz de fumée:oxygène dans l'air synthétique étant compris entre 4:1 et 1:1, <u>caractérisé</u> en ce que la pression d'alimentation du brûleur (4a) à l'extrémité avant (1a) du four rotatif (1) formant la chambre de combustion est réglable et en ce qu'à puissance de brûleur égale, la pression d'alimentation du brûleur en fonctionnement avec de l'air synthétique est réglée à une valeur telle que le rapport pression d'alimentation du brûleur en fonctionnement avec de l'air synthétique:pression d'alimentation du brûleur en fonctionnement avec de l'air normal est compris entre 1:2,5 et 1:5 et de préférence égal à 1:4.

2. Procédé selon la revendication 1, caractérisé en ce que la pression d'alimentation du brûleur en fonctionnement avec de l'air synthétique est comprise entre 5 et 15 mbar et de préférence égale à 8 mbar.

3. Procédé selon la revendication 1 ou 2, caractérisé en ce que la quantité d'air synthétique est réglable indépendamment sur le système asservi d'incinération des déchets, sur le système asservi de combustion dans la chambre de postcombustion et sur le système asservi de combustion d'un porteur d'énergie d'assistance.